# EUROPEAN PATENT APPLICATION

(11) **EP 3 081 125 A1**
(43) Date of publication of application: **19.10.2016**
(21) Application number: 15163943.2
(22) Date of filing: 17.04.2015
(51) Int. Cl.: A47J 36/00, A47J 36/06, A47J 36/16, A47J 36/20, A47J 37/10, A47J 37/12, A47J 27/10

(54) **COOKING SYSTEM**

(71) Applicant: Electrolux Appliances Aktiebolag, 105 45 Stockholm (SE)
(72) Inventor: Carrella, Stefano, 91541 Rothenburg o. d. Tauber (DE); Kaiser, Kersten, 91541 Rothenburg o. d. Tauber (DE); Luckhardt, Christoph, 91541 Rothenburg ob der Tauber (DE); Herzog, Michael, 91541 Rothenburg ob der Tauber (DE); Puchinger, Bianca, 91541 Rothenburg ob der Tauber (DE); Burkhardt, Jennifer, 91541 Rothenburg o. d. Tauber (DE)
(74) Representative: Baumgartl, Gerhard Willi

(57) **Abstract**

A cooking system (1), particularly suitable for a sous vide cooking process of at least one piece of foodstuff (9), particularly vacuum packaged foodstuff (9), comprising a cooking pot (2), and an insert (3) suitable for positioning of said foodstuff (9), wherein the insert is arrangable in said cooking pot (2), wherein said insert (3) comprises at least one positioning element (4) for positioning a foodstuff (9) spaced to at least one wall (7) and/or lid (10) of said cooking pot (2) and/or spaced to a surface of a fluid fillable or filled into the cooking pot (2), and wherein the insert (3), particularly the at least one positioning element (4) comprises a fluid circulation enhancing means, suitable for enhancement of circulation of said fluid (5) in said cooking pot (2).

## Description

The present invention relates to a cooking system, particularly for sous-vide cooking, an insert for a cooking system, a cooking pot for a cooking system, a lid for a cooking system and use of a cooking system and/or a cooking pot and/or an insert.

In assisted cooking processes, particularly cooking on ordinary kitchen hobs is known. Usually the cooking process is carried out by set and/or control of cooking temperature and time. Thereby, either - based on a more empirically approach - a fixed temperature input by the hotplate is used, or - more advanced - the cooking temperature is assessed by a sensor reading during the cooking process, e.g. by a temperature measurement using a thermometer or other kind of temperature sensor.

Particularly in connection with sous-vide cooking, which is one possible application for the use of assisted cooking, temperature control is critical. For sous-vide cooking processes usually foodstuff is sealed in plastic bags with vacuum, and is placed in a water bath for a long period of time at a, preferably well-defined and controlled, temperature. However, sous-vide cooking processes with steam instead of a water bath exist as well.

Although, particularly in assisted cooking, there may be cooking processes with different phases, each phase having an own set temperature, for achievement of optimal cooking results, particularly for sous-vide cooking processes, it is in general desired to have a homogeneous temperature for the whole cooking vessel during a cooking process, or at least during a particular cooking phase. Usually it shall remain constant during the cooking process, at least during a particular cooking phase. As well, accuracy of temperature is desired. By having a controlled and homogeneous temperature for a long period of time, the foodstuff will approximately reach in each point the same temperature without being heated above this temperature in any point. In sous-vide cooking processes even a deviation of about 1°C from the desired temperature may result in a sub-optimal cooking result.

Particularly, in water baths used for sous-vide cooking processes, a pump may be provided, which causes the water to circulate in order to have a homogeneous temperature distribution inside the water bath. With regard to steam ovens, steam temperature may be controlled and, additionally steam may circulate due to a fan element provided in the steam oven. In order to avoid contact of the foodstuff with a bottom of such steam oven, a kind of positioning element may be provided, for example a rack or grid structure.

For sous-vide on hobs, however, there is a problem in that a potential non-homogeneous distribution of the temperature inside a cooking pot easily exists. In particular, the fluid, particularly water, is not equally mixed inside the cooking pot or during the cooking process or phase and thus no homogeneous distribution of the fluid and thus of the temperature inside the cooking pot is achieved. In addition, due to the non-homogeneous temperature distribution, the temperature measurement needed for the temperature control of the fluid in the cooking pot causes problems. The non-homogeneous distribution of the temperature of the fluid in a cooking pot mainly results from the heating from one side, usually the pot bottom, and, additionally, from cooling from other sides, e.g. the pot walls and/or lid by the surrounding air. Thus, particularly in cooking pots filled with water, a non-homogeneous temperature distribution results.

In order to avoid such non-homogeneous temperature distribution it is known to circulate the water using a pump. In addition, self-stirring pots are known provided with a sidewall of particular shape, which allows self-stirring of the fluid upon heat supply from the hot plate. Also avoiding the foodstuff to be affected by the temperature inhomogeneity may be achieved by rotating the foodstuff, similar as known in some microwaves, which, however, is not convenient for ordinary kitchen cooking pots.

The document WO 2013/170266 A1 describes a cooking system for a plurality of cooking modes, comprising sous-vide cooking. Said cooking system comprises a rack to place foodstuff. However, the cooking system according to this document is insufficient for achieving a homogeneous temperature distribution of the fluid in the cooking pot.

It is an object of the present invention to provide a cooking system, particularly suitable for sous vide cooking process, in a cooking pot, allowing a homogeneous temperature distribution of the fluid in the cooking pot.

It is a further object of the present invention to provide a cooking system, particularly suitable for sous vide cooking process, which allows a more homogeneous temperature distribution during the cooking process as well as a higher accuracy of temperature control.

These and other problems are solved by the subject matter of the attached independent claims.

The above objects of the invention are achieved by a cooking system according to claim 1, an insert according to claim 12, a cooking pot according to claim 13, a lid according to claim 14 and use of a cooking system and/or a cooking pot and/or an insert in a sous-vide cooking process, according to claim 15.

Preferred embodiments may be taken from the dependent claims.

The present invention is described in the following particularly focusing on the cooking system according to the present invention. However, it is to be understood that each and any feature described herein in connection with the cooking system according to the present invention, an insert according to the present invention, a cooking pot according to the present invention, a lid according to the present invention and/or use of a cooking system and/or a cooking pot and/or an insert in a sous-vide cooking process according to the present invention, may be separately or in any combination also be a feature of the cooking system according to the present invention, an insert according to the present invention, a cooking pot according to the present invention, a lid according to the present invention and/or use of a cooking system and/or a cooking pot and/or an insert in a sous-vide cooking process according to the present invention.

A cooking system according to claim 1, is particularly suitable for a sous vide cooking process of at least one piece of foodstuff, particularly vacuum packaged foodstuff, and comprises a cooking pot, and
an insert suitable for positioning of said foodstuff, wherein the insert is arrangable in the cooking pot.

Said insert comprises at least one positioning element for positioning a foodstuff such that a fluid fillable or filled into the cooking pot can circulate around the foodstuff. Advantageously, the insert, particularly the at least one positioning element comprises a fluid circulation enhancing means, suitable for enhancement of circulation of said fluid in said cooking pot.

The present inventors have surprisingly found that a cooking system according to the present invention allows using a cooking pot on a kitchen hob providing a more homogeneous temperature distribution of the fluid in the kitchen pot. This particularly allows more precise cooking results. The cooking system according to the present invention thus is particularly useful for sous-vide cooking processes carried out on a kitchen hob, particularly in such cooking pot, more particularly independent from an additional device, e.g. a steam supply, and/or additional devices, e.g. a fan or pumping element.

The insert of the cooking system according to the present invention, particularly the insert according to the present invention, comprises at least one positioning element, which allows positioning of the foodstuff such that a fluid fillable or filled into the cooking pot can circulate around the foodstuff. The insert and, preferably, the at least one positioning element, comprises a fluid circulation enhancing means for fluid circulation enhancement, particularly upon heat supply to said cooking pot. Such heat supply may result from a hot plate of a kitchen hob the cooking pot is placed on.

The cooking system according to the present invention comprises an insert, which is arranged or to be arranged in the cooking pot. The insert comprises at least one positioning element for positioning a foodstuff to be cooked, which is to be placed on or in said positioning element. Thereby the foodstuff to be placed or placed into the insert is positioned such that a fluid fillable or filled into the cooking pot can circulate around the foodstuff. This placement of the foodstuff may be carried out before or after said fluid is filled or partially filled into the cooking pot. Said fluid may be any fluid used for a cooking process in said cooking pot. For example, liquids, e.g. water or oil, fat, or combinations thereof may be used as fluid. However, also steam, water vapor or the like may be used as a fluid. The present invention is described particularly for a cooking process using water as a fluid, however, it is not to be understood to be bound thereto.

The positioning element for positioning a foodstuff, particularly in the cooking pot, is configured such that a fluid fillable or filled into the cooking pot can circulate around the foodstuff. In connection therewith, it is to be understood that by such positioning of the foodstuff, the foodstuff can be kept away from locations usually having relative high temperature, e.g. very close to the pot bottom, and/or it can be kept away from locations usually having relative low temperature, e.g. very close to pot walls or a surface of the fluid, particularly if being a liquid.

As the fluid fillable or filled into the cooking pot is allowed to circulate around the foodstuff during a cooking process, a more homogenous temperature distribution in the cooking pot, particularly around the foodstuff can be achieved.

The insert, particularly the at least one positioning element, comprises a fluid circulation enhancing means.

A "fluid circulation enhancing means" as used herein, enhances or is suitable to enhance the circulation of the fluid in the cooking pot, preferably upon heating said fluid and/or heat supply to said fluid. Such heating and/or heat supply may be achieved by placing the cooking pot on a hot plate. Accordingly, a bottom wall of the cooking pot may be heated by such hot plate, transferring the heat to the fluid in the cooking pot. Such fluid circulation enhancement means as used herein, preferably refers to a structural element, which enhances the circulation of the fluid in the cooking pot, particularly water, inside the cooking pot such that a more homogeneous fluid temperature distribution in the cooking pot, preferably in an area close to the foodstuff to be cooked is achieved.

More preferably, a fluid circulation enhancing means as used herein refers to a structural element suitable for creating space for circulation of the fluid and/or to redirect a flow of the fluid. Additionally or alternatively, such fluid circulation enhancement means may have at least partially a structure, which influences the convection of the fluid within the cooking pot during a cooking process.

In connection therewith, a person skilled in the art will immediately acknowledge that warmed or hot water is lighter compared cold or colder water, accordingly warmed or heated water will rise up, whereas colder water will go down. Accordingly, the structure of such fluid circulation enhancement means according to the present invention may be configured to influence the direction of the flow of the fluid, preferably a hotter and thus lighter portion of the fluid and/or a colder and thus heavier portion of the fluid. Such influence of a portion of the fluid being hotter upon heat supply and/or being colder may result in increased convection and/or flow. Hotter fluid, which is lighter than colder fluid may flow towards the upper surface of the fluid, while colder fluid at a surface of the fluid and/or at colder pot sidewalls may be replaced. Hence, circulation of the fluid in the cooking pot is advantageously enhanced by such fluid circulation enhancing means. However, it is to be understood that such circulation may also advantageously enhance the heat transfer to the food.

Accordingly, the cooking system according to the present invention, particularly the fluid circulation enhancing means, is suitable for influencing the water circulation, in that the insert arranged or placed in the cooking pot comprises at least one positioning element and said fluid circulation enhancement means.

Such fluid circulation enhancing means as used herein, preferably may be selected from the group comprising an inclined element, e.g. an inclined plate, foot elements, structures which enhance circulation, e.g. spirals, guiding means, channels, or the like.

In way of a non-limiting example, a positioning element, for example in the form of a base plate, may comprise such at least one fluid circulation enhancing means, e.g. in the form of an inclined plate element, which allows water at the pot bottom to first flow in direction of the colder pot walls, and then rise in direction of the fluid surface before impinging the foodstuff. Such configuration will allow to have a more homogeneous water temperature distribution close to the foodstuff.

The cooking system according to the present invention allows - by an enhanced fluid circulation - to create a more homogeneous temperature distribution within the fluid in the cooking pot, particularly at the position where the food is located.

For example, by using fluid circulation enhancing means, e.g. an inclined plate element, i.e. inclined relative to the original direction of flow of the fluid, the direction of the flow can be advantageously changed. For example, with such fluid circulation enhancing means heated or warmer water may rise up within the cooking pot and may be directed towards the sidewalls of the cooking pot by the fluid circulation enhancing means.

Accordingly, it is to be understood that a fluid circulation enhancing means according to the present invention allows to redirect the flow of the fluid during a cooking process. The flow of the fluid, particularly water being heated up, at the pot bottom, which is slightly too hot, may be redirected towards the pot walls and may rise to the surface of the fluid, where it may cool down to a desired temperature and, subsequently may impinge the foodstuff with a desired, particularly not too hot temperature. It is to be understood that without such fluid circulation enhancing means according to the present invention, e.g. with only a base plate having through holes or a simple grid, the heated, warmer fluid would impinge the foodstuff from below, whereas a more cold fluid would impinge on the foodstuff from the top side, as e.g. the top water layer in a cooking pot is colder than the bottom water layer in approximately to the bottom, i.e. heat plate of the stove. Notably, however, without such fluid circulation enhancing means according to the present invention, e.g. with only a base plate having through holes or a simple grid, the fluid circulation is most likely not enhanced sufficiently and, a homogeneous temperature during the cooking process as well as accuracy of temperature are not reliably achieved. In connection therewith it is to be understood that also without such fluid circulation enhancing means a mixture of hot and cold water may take place to a certain degree, however, according to cooking systems of the prior art a resulting temperature distribution may be found to be not sufficient homogeneous. A fluid circulation enhancing means according to the present invention thus allows a more homogeneous temperature distribution of the fluid within a cooking pot during a cooking process. As the at least one positioning element is arranged such that a foodstuff is positioned such that a fluid fillable or filled into the cooking pot can circulate around the foodstuff, a circulation of fluid around the foodstuff is advantageously enabled. Particularly, at every side of the foodstuff the fluid may circulate and, preferably impinge the foodstuff with the fluid having a relative homogenous temperature distribution. This particularly allows a heat transfer to the foodstuff at every side of said foodstuff with the fluid having a relative homogenous temperature distribution.

In an embodiment of the cooking system according to the present invention the insert, the separating means, the spacer elements and/or the positioning elements may comprise such fluid circulation enhancing means. For example, a channel may be provided as part of a grid, e.g. a spacer element and/or separating means. Such channel may advantageously enable the circulation of the fluid, particularly between different pieces of foodstuff.

In a further embodiment, foot elements, e.g. a foot structure, may be provided as fluid circulation enhancing means. For example, a plate-like structure, plate, and/or particularly a base plate, may be provided with such foot elements, preferably to configure such plate-element or plate such that foodstuff may be positioned on such plate-element spaced to at least one wall of said cooking pot, preferably the wall being a bottom wall of said cooking pot.

Preferably, upon heating and/or heat supply to the fluid in the cooking pot, the circulation of the fluid in the cooking pot is enhanced by said fluid circulation enhancing means. This results in a more homogenous distribution of the temperature of the fluid within the cooking pot. The enhanced circulation preferably results from a convection, i.e. a concerted, collective movement of groups or aggregates of molecules within the fluid through convection, preferably as a result from an increase of temperature of said fluid - which reduces density - more preferably at one particular site in the cooking pot, e.g. a bottom area of the cooking pot.

Accordingly, the present invention provides a cooking system, particularly an insert as an accessory or integral part of the cooking pot, which insert is arranged or is arrangeable in the pot or attached to the pot.

In an advantageous embodiment of the inventive cooking system according to the present invention, the insert comprises at least one further positioning element for positioning a foodstuff, preferably a vacuum packaged foodstuff.

A positioning element and a further positioning element as used herein, preferably refer to elements configured to limit the free movement of a foodstuff positioned to the insert in at least one direction.

A foodstuff, particularly a foodstuff in a bag, for example a vacuum packed foodstuff, may move in the fluid during the cooking process, particularly if a liquid is used as fluid, e.g. water, the foodstuff may swim or float. Additionally foodstuff may change density during the cooking process. It is to be understood that as a result of a change of density, the foodstuff may float within or on top of the fluid, or may sink to the bottom during a part of the cooking process. It is to be understood that by not keeping a foodstuff in a constant positon during the cooking process, the food may be cooked at different temperatures in the different positions due to a non-completely homogeneous temperature distribution. It is to be understood that, particularly for sous vide, already a few degrees difference in temperature may influence the cooking result. With foodstuff packaged in a bag, foodstuff and bag, particularly plastic bag, together may be a little bit lighter or heavier than the fluid, particularly a liquid, e.g. water. An exact positioning of the foodstuff thus may be desired. A positioning element and a further positioning element may thus be positioned such that foodstuff is more exactly positioned to the insert, particularly a movement of the foodstuff, e.g. by floating and/or swimming is limited. Also the at least one further positioning element for positioning a foodstuff is, preferably configured such that a fluid fillable or filled into the cooking pot can circulate around the foodstuff. Additionally and advantageously, a fluid circulation enhancing means, which is suitable for enhancement of circulation of said fluid in said cooking pot, allows for a redirection of the flow of the fluid.

A positioning element, as used herein preferably, may be configured and/or arranged such that the free down movement, particularly towards a bottom and/or the bottom wall of the cooking pot is limited.

Preferably, a further positioning element may be configured and/or arranged such that a free sideway movement, particularly towards a sidewall of the cooking pot, is limited. Alternatively and/or additionally, a further positioning element may be configured and/or arranged such that the free up movement, particularly to the upper surface of the fluid and/or towards a central upper opening of the cooking pot, is limited.

In a further embodiment of the inventive cooking system according to the present invention, the insert and/or the at least one positioning element and/or the at least one further positioning element is configured such that the foodstuff is positioned such that a fluid fillable or filled into the cooking pot can circulate around the foodstuff. Preferably, the insert and/or the at least one positioning element and/or the at least one further positioning element is configured such that the foodstuff is positioned spaced to a surface, preferably upper surface, of the fluid, and/or to at least one wall and/or lid of said cooking pot, preferably the wall selected from the group comprising bottom wall and side wall of said cooking pot.

Thus, according to the present invention an insert comprising such positioning element and/or such further positioning element is advantageous in that foodstuff is held in place during a cooking process, and particularly such that a fluid fillable or filled into the cooking pot can circulate around the foodstuff. Particularly, the insert and/or the at least one positioning element and/or the at least one further positioning element is configured such that the foodstuff is positioned spaced to at least one wall and/or lid and/or an upper surface of said fluid, particularly fluid surface, of said cooking pot such that, preferably, the foodstuff is held in a position, which advantageously allows space to said at least one wall and/or lid and/or an upper surface of said fluid, particularly liquid surface, for essentially unhindered circulation of the fluid in said space, particularly such that a fluid fillable or filled into the cooking pot can circulate around the foodstuff.

It will be immediately acknowledged that according to the various embodiments of the present invention such positioning element and/or such further positioning element is advantageous in avoiding foodstuff to be located, particularly during a cooking process, in positions within the cooking pot, which are hotter or colder than a temperature desired for cooking the foodstuff. Thus, the cooking system according to the present invention, particularly the insert, allows placing foodstuff in the cooking pot to have the food located in a position, where the heterogeneity of the temperature distribution within the fluid is relatively small.

In other words, the foodstuff may be held in a position and/or the insert and/or the at least one positioning element and/or the at least one further positioning element is configured such, that there is still sufficient free space close to the at least one wall and/or lid and/or an upper surface of said fluid, particularly liquid surface, of the cooking pot for essentially unhindered circulation of the fluid in said space.

In a further advantageous embodiment of the inventive cooking system according to the present invention, the at least one positioning element is located in proximity to the bottom wall of the cooking pot, preferably arranged in parallel to said bottom wall.

Particularly, when the positioning element is positioned in proximity to the bottom wall of the cooking pot providing space to said bottom wall, the foodstuff is held away from said bottom wall of the cooking pot. Thus, an overheating of the foodstuff at said bottom wall, e.g. due to close positioning of the foodstuff to the bottom wall directly heated by the hot plate of the kitchen hob and thus exposure of the foodstuff to an area having a too high temperature for the desired cooking process, may be advantageously avoided.

In a preferred embodiment the at least one further positioning element is a top element 14a, located in proximity to the upper opening and/or upper area of the cooking pot, preferably arranged in parallel to said upper fluid surface.

In a preferred embodiment the at least one further positioning element is a side element, located in proximity to a side wall of the cooking pot, preferably arranged in parallel to said side wall.

It is to be understood that the term "in parallel" in connection with the various embodiments of the present invention is used, preferably, to indicate an orientation of an object. For example, a positioning element may be arranged "in parallel" to a wall of the cooking pot, particularly to a bottom wall or a side wall of said cooking pot, or to a fluid surface. In connection therewith, it will also be understood, however, that various geometries of a cooking pot are considered herein to be within the scope of the invention. A cooking pot, for example, may be of a circular or rectangular shape having upright or slightly inclining sidewalls. The term "in parallel" therefore refers to an orientation, which preferably is basically parallel to the object, e.g. wall or surface, to which it is referred. For example, a cooking pot having a circular ground shape, may have essentially upright side walls. More precisely, if an ordinary round cooking pot is considered, said cooking pot may comprise one upright side wall, arranged upright and circumferential relative to the flat circular bottom of the cooking pot. A positioning element being arranged in parallel to a side wall, may thus be arranged and oriented in parallel to at least one portion of the upright side wall, i.e. may also be arranged in an upright orientation.

Particularly, when a further positioning element is positioned spaced to a sidewall, lid, upper opening or an upper area, e.g. fluid surface, the foodstuff is held away from said sidewall and/or upper area of the cooking pot. Accordingly, too close positioning of the foodstuff to the side wall(s) or upper area having lower temperature, e.g. due direct room temperature air, may be advantageously avoided. Thus, exposure of the foodstuff to an area with a temperature too low for the desired cooking process may be advantageously avoided.

Particularly, when the positioning element is located in proximity to the bottom wall of the cooking pot it is preferred that said positioning element is arranged in parallel to said bottom wall. In such configuration, a part of the fluid, particularly water, at an area near the cooking pot bottom, may be caused to flow sideward in direction of the colder pot walls, by the fluid circulation enhancing means, advantageously enhancing fluid circulation. More preferably, the positioning means and/or the further positioning means is configured such that after said sideway flow the fluid flows in direction towards the fluid surface before said flow, particularly of initially more hot fluid, approaches the foodstuff. This will allow having a more homogeneous water temperature distribution close to the foodstuff.

Preferably, the positioning element, particularly if the positioning element is located in proximity to the bottom wall, has a plate-like structure, more preferably is a plate.

Such plate-like structure or plate may comprise at least one holes or opening, particularly also representing a fluid circulation enhancing means, in order to improve fluid circulating. In such case, it is preferred to provide a hole or opening with an inclination suitable to redirect the flow of the fluid, particularly a liquid, e.g. water.

A person skilled in the art will immediately understand and be able to configure such fluid circulation enhancing means, particularly such hole or opening, with regard to number, diameter or geometry, e.g. inclination.

In connection therewith, it is to be understood that such holes or openings may be of particular advantage if configured and arranged as fluid circulation enhancing means. The direction of the flow of a heated portion of the fluid, e.g. hot water, would be directed to the top, without a positioning element located in proximity to the bottom wall and having a plate-like structure, more preferably being a plate, and without any further fluid circulation enhancement means. Such positioning element located in proximity to the bottom wall and having a plate-like structure, e.g. a base plate, however provided without a fluid circulation enhancement means, e.g. provided only with ordinary through holes, e.g. being perforated, without any specific geometry of a fluid circulation enhancement means, e.g. no inclination, specific channels, or the like,, will not be capable of enhancing fluid circulation sufficiently, particularly a direction of a fluid flow would not be changed significantly.

By contrast, a positioning element located in proximity to the bottom wall and having a plate-like structure, e.g. a base plate, provided with a fluid circulation enhancement means, e.g. inclined openings, is capable of redirecting a fluid flow, e.g. of hot water, for example, towards the side walls of the cooking pot, where the cooling of the fluid takes place before the fluid impinges on the foodstuff. Such configuration advantageously improves the temperature homogeneity of the fluid, particularly if water.

In an embodiment a positioning element having a plate-like structure, e.g. a base plate, preferably if located in proximity to the bottom wall, may comprise a central opening and/or openings in proximity to a side wall of the cooking pot. In such configuration, a fluid circulation enhancement means may be provided being a slope in order to redirect the flow of the hot fluid towards the sidewalls of the cooking pot. Such central opening may allow a redirection of the cold fluid to flow to the pot bottom again. In connection therewith, it is important to known, that usually induction hobs create the most heat outside the center of the cooking pot.

Such plate-like structure or plate may have different shapes, however, a person skilled in the art will understand, that such plate-like structure or plate may be designed to fit into the cooking pot, and thus according to the dimensions of cooking pots. E.g. the diameter of such plate-like structure or plate may be of about 21 cm in order to fit in pots, which are usually used for cooking processes.

The positioning element and/or the further positioning element may comprise, or be configured as, a fluid circulation enhancing means, e.g. as a plate, which forces the flow of the fluid towards the side walls, and/or may further comprise further fluid circulation enhancing means, comprising but not limited to guiding means, e.g. guiding channels, inclined openings or holes, slopes, plate-like structures or grooves, and/or stirring means, e.g. propellers, and/or disturbing means, e.g. edges or projections, further enhancing fluid circulation and/or fluid turbulence. In connection therewith, passive components, which have some kind of stirring function and/or which influences the direction of the fluid flow are preferred, particularly without the need for an additional power supply.

In a preferred embodiment, preferably if the at least one further positioning element is a top element 14a, located in proximity to the upper opening and/or upper area of the cooking pot, more preferably arranged in parallel to said upper fluid surface, said at least one further positioning element has a plate-like structure, more preferably is a plate.

In connection therewith it is to be understood that according to the present invention also a further positioning element, particularly if arranged and/or configured as a top element, more particularly if located in proximity to the upper opening and/or upper area of the cooking pot, may be a configured as a fluid circulation enhancing means as described herein in connection with the positioning element according to the present invention.

In a particularly preferred embodiment, the insert comprises a positioning element located in proximity to the bottom wall and a further positioning element located in proximity to the upper opening and/or upper area of the cooking pot, preferably the positioning element and/or the further position element configured as a plate-like structure, more preferably being a plate, wherein preferably the positioning element and/or the further position element is arranged in parallel to said bottom wall and to the upper opening of the cooking pot, respectively.

In a particularly preferred embodiment, the insert comprises a positioning element located in proximity to the bottom wall and a further positioning element located in proximity to the upper opening and/or upper area of the cooking pot, both the positioning element and the further position element configured as a plate-like structure, preferably being a plate, wherein the positioning element and the further position element is arranged in parallel to an upper fluid surface.

It will be immediately understood by a person skilled in the art that if reference is made herein to an upper surface or surface of a fluid, a surface is meant which is or may be formed by a fluid filled in a cooking pot, appropriate for the desired cooking process. Said fluid must not be necessarily filled in or fully filled in said cooking pot. However, a person skilled in the art - as well as any user, will immediately know, how such surface will be oriented in said cooking pot, if filled with such fluid, particularly if the cooking pot is put on a kitchen hob such that the cooking process may be carried out. The same applies if reference is made herein to an upper opening of the cooking pot. The person skilled in the art - as any user - will, however, immediately understand that such opening may have various configuration and forms, however, such opening may define a plane, which completes the interior space of the cooking pot. If reference is made to an orientation of any element according to the invention in relation to a wall, particularly a bottom wall, of a cooking pot, it will be immediately understood that an ordinary cooking pot having a flat bottom and essentially upright sidewalls is preferred to understand the present invention. The same applies to an opening or a fluid surface. However, the present invention is not limited to such ordinary cooking pot. More particularly, a person skilled in the art will be able to apply immediately the teaching of the present invention to any other design of a cooking pot, particularly with inclined sidewalls, e.g. a wok, or the like.

Preferably, the insert and/or the at least one positioning element and/or the at least one further positioning element, particularly a positioning element and/or a further positioning element having a plate-like structure, preferably being a plate, is configured such that the foodstuff is positioned spaced to a surface, preferably upper surface, of the fluid, and/or to at least one wall and/or lid of said cooking pot, preferably the wall selected from the group comprising bottom wall and side wall of said cooking pot, preferably a bottom wall, the space being of about 2 cm. The present inventors have found that in having such distance of about 2 cm to a surface of the fluid, and/or to at least one wall and/or lid of said cooking pot, particularly a distance of about 2 cm to the bottom of the cooking pot, the homogeneity of the water temperature around the foodstuff is further improved in addition to the enhancement of the homogeneity caused by a fluid circulation enhancing means of the insert, particularly of the at least one positioning element.

In a preferred embodiment, wherein the at least one further positioning element is a top element 14a, located in proximity to the upper opening and/or upper area of the cooking pot, preferably arranged in parallel to said upper fluid surface, said at least one further positioning element being a plate-like structure, preferably being a plate, said top element may have a closed surface or at least a substantially closed surface at the top to avoid vaporization. Particularly, a closed surface or substantially closed surface on the top may have a comparable impact like a lid for regular pots, in that less vaporization and additionally less energy transfer to the air due to less convection, may occur. In connection therewith, it is to be acknowledged that vaporization of water usually causes a huge loss of energy, which thus may be avoided. In connection therewith, it will be also immediately acknowledged that in case of vaporization, the surface of the fluid may be cooled more than in absence of such vaporization. Accordingly, in avoiding vaporization, e.g. by not having water in contact with surrounding air, the homogeneity of the temperature distribution may be advantageously improved. Additionally or alternatively said top element may comprise an insulation means, e.g. be insulated. If said top element is insulated, heat loss may be reduced. Thus, a top portion of the fluid would not be cooled to that extend as without insulation. Accordingly, the homogeneity of temperature distribution within the fluid would be improved. Additionally, there is the need to supply less energy to the pot bottom. Thus, the pot bottom is not heated up so much like without insulation on top and thus, by this effect, the homogeneity of the temperature distribution is improved, as well. Additionally or alternatively said top element may comprise further fluid enhancing means, comprising but not limited to guiding means, e.g. guiding channels, plate like structures or grooves, inclined opening or holes, and/or stirring means, e.g. propellers, and/or disturbing means, e.g. edges or projections, further enhancing fluid circulation and/or fluid turbulence particularly, as described herein in connection with the positioning element according to the present invention. Additionally or alternatively such top element may comprise further structures capable of connecting, preferably fluidically connecting the top side of the top element and the bottom side of the top element, more preferably in a central region of said top element, e.g. in an approximately central position, e.g. of a plate-like top element. For example, it is avoided that the foodstuff gets in contact with the pot walls or the surrounding air, however, the top element may be configured such that a portion of liquid located on the top side of the top element is in fluid communication with the fluid at the bottom side of the top element. More particularly, a closed surface on top may be realized, providing, however, the possibility to insert a probe or to allow for an exchange of fluid from the bottom to the top of the top element and vice versa.

Additionally or alternatively, such top element may comprise an opening, preferably a central opening, for placing foodstuff below said top element, particularly through said opening. E.g., a plate-like top element may comprise an opening, e.g. located approximately in the center of the plate-like top element, having a diameter sufficient to place a foodstuff into the interior of the cooking pot, e.g. to the positioning element, e.g. configured as a base plate.

Such positioning element, particularly if located in proximity to the bottom wall and having a plate-like structure, more preferably being a plate, particularly a base plate may be provided in addition to improve circulation of water.

In a further advantageous embodiment of the inventive cooking system according to the present invention, the at least one positioning element, is configured as a plate.

In a preferred embodiment, the insert is configured as a rack.

Such rack advantageously provides a light structure, which particularly may be removed from the cooking pot. More particularly, a rack allows a more free circulation of the fluid within the cooking pot. A rack further allows exposing the foodstuff to the fluid in a more free way. However, such rack may be configured such that the foodstuff is positioned spaced to a surface of the fluid and/or to at least one wall and/or lid of said cooking pot, preferably the wall selected from the group comprising bottom wall and side wall of said cooking pot, preferably a bottom wall, the space being of about 2 cm, which allows for avoiding positions of the foodstuff close to at least one, preferably all, of the pot walls. In connection, therewith it is to be understood that a rack as used herein, preferably, refers to a positioning structures comprising rod and/or mesh elements, e.g. steel rods, or the like. Such rack may, however, comprise further features as described herein according to the present invention. Particularly such rack may comprise further positioning elements and/or the positioning element, may be configured as a plate-like structure, particularly being a plate.

In an embodiment, the insert according to the present invention may be configured such that it is obvious for a user, how to place the foodstuff in it, particularly if configured as a rack. Such insert, particularly such rack, for example, may comprise a recess structure, or may be formed as a basket. Such insert, particularly such rack, may comprise, preferably at an upper edge, a reception structure for receiving said foodstuff. For example, a region, preferably a central region, of said upper edge may be lowered facilitating foodstuff placement.

In a further advantageous embodiment of the inventive cooking system according to the present invention, the insert, comprises at least one separating means for separation of a first piece of foodstuff from at least one further piece of foodstuff, wherein preferably said at least one separating means can be attached removably to said insert.

Such separating means, are advantageously forming compartments in said insert, whereby a first piece of foodstuff may be put in a compartment separate from a further compartment where a at least one further piece of foodstuff is placed. Particularly it is avoided that one piece of foodstuff contacts a further piece of foodstuff.

It will be understood that by separating a first piece of foodstuff from at least one further peace of foodstuff and allowing the water to circulate around each piece of foodstuff, the cooking time can be reduced compared to all pieces being in contact with each other.

Preferably the at least one separating means may be removable attached to said insert. This allows using the insert for different sizes and /or numbers of pieces foodstuff. For example, without such separating means one bigger piece of foodstuff may be placed to the insert, whereby with such separating means more than one and/or smaller pieces of foodstuff may be placed to said insert. It will be immediately understood that such arrangement allows to choose and adjust the size of a compartment formed in between such separating means in accordance to the number and/or size of the piece(s) of foodstuff to be cooked.

In a preferred embodiment the at least one separating means, is configured and/or arranged such that fluid is able to circulate between the first piece of foodstuff and the at least one further piece of foodstuff.

This particularly allows that each piece of foodstuff is essentially equally exposed to the fluid, which may circulate also between the first piece of foodstuff and the at least one further piece of foodstuff.

In an embodiment the at least one separating means is configured as or comprises a fluid circulation enhancement means. This may particularly allow to enhance circulation of the fluid by a certain design of the separating means.

In a further advantageous embodiment of the inventive cooking system according to the present invention, the at least one separating means comprises at least one first spacer element and at least one second spacer element, wherein the at least one first spacer element and the at least one second spacer element are arranged spaced to each other, wherein preferably the at least one first spacer element and the at least one second spacer element are configured as parallel grids, and/or wherein the at least one first spacer element and the at least one second spacer element are arranged such that a distance between the at least one first spacer element and the at least one second spacer element is at least 5 mm, at least 4 mm, or at least 3 mm.

Such spacer element may also be configured to be attached removably to the insert. Accordingly, a flexible design of compartments for different numbers and/or sizes of piece(s) of foodstuff may advantageously be achieved.

Such spacer elements advantageously may provide a space in between a first piece of foodstuff placed in a first compartment and a second piece of foodstuff placed in a second compartment. Accordingly, between the spaced elements of one compartment and the spacer elements of a second compartment, as well as between the spacer elements of one single compartment the fluid may circulate essentially freely.

Particularly, the spacer elements are designed in such a way that the fluid, particularly water, may circulate between the single pieces of foodstuff. For example, a separating means may be made of two spacer elements, preferably configured as parallel grids. Said spacer elements may have a distance of, e.g. at least 5 mm, at least 4 mm, or at least 3 mm from each other. In the space resulting from said distance, the fluid, particularly water, may circulate.

A separating means and/or a spacer element according to the present invention may be configured such that it is flexible in size. This allows to adapt the size of the separating means and/or spacer element to a desired size, e.g. of the piece of foodstuff to be cooked and/or the geometry and/or size of the used cooking pot. It is also within the scope of the present invention that a set of different separating means and/or spacer elements, varying in design, shape, and/or length may be provided. If designed to be removably attachable to the insert, different compartments for varying purposes, particularly for different numbers and/or sizes of piece(s) of foodstuff may be adjusted by a user easily. It is, however, also in the scope of the present invention to provide a separating means and/or spacer element, which is as such adjustable in length and/or shape. This may, for example, be achieved using telescope arrangement and/or a flexible or bendable material.

In a further advantageous embodiment of the inventive cooking system according to the present invention, the insert, preferably the at least one further positioning element, and/or the at least one separating means, preferably the at least one first spacer element and/or the at least one second spacer element, comprises at least one fixing element.

Such fixing element advantageously may be provided for holding or fixing the piece of foodstuff in the desired place, particularly in the positioning element and/or insert. Without such a fixing element, there would be the risk that the piece of foodstuff to be cooked, e.g. plastic bags comprising the piece of foodstuff, in particular if there is no perfect vacuum, may float or swim to the fluid surface, where the water is colder and additionally may hinder the circulation of water.

In a preferred embodiment the at least one fixing element is configured as a hook, preferably a barb hook.

Such configuration may be advantageously hold the piece of foodstuff in its desired place. It will be immediately understood by a person skilled in the art that for holding a foodstuff, particularly a plastic bag comprising a foodstuff, in the right position only light forces may be sufficient. Accordingly, the fixing element may be configured in various ways. Particularly the fixing elements may be configured as a separate or an integral part of the separating means.

In an embodiment, the fixing element is configured to form an integral part of the insert.

In an embodiment, the separating means and/or the spacer elements are configured to be flexible fixing elements. For example, the separating means and/or the spacer elements are configured as flexible rods. In an embodiment, a pair of spacer elements is configured as a pair of flexible rods arranged inclined to each other. Such configuration, allows the pair of spacer elements to form a fixing elements, which as such hold the piece of foodstuff in place. In order to place the piece of foodstuff to be cooked in between said pair of spacer elements, the spacer elements may be pressed apart. Preferably, said spacer elements are configured as flexible rods, which allows spacer elements to fix the piece of foodstuff in between the two flexible rods.

In a preferred embodiment the fixing element comprises at least one hinge element, preferably manufactured from an essentially flexible material.

Such hinge element may be advantageously provided, preferably in connection with a closing rod, to open and/or close the compartment, wherein the piece of foodstuff is to be placed. In addition, such hinge elements may be manufactured from a flexible material. Such flexible material may advantageously be used as an alternative or in addition to a classical hinge mechanism, particularly if just a limited movement is needed.

Preferably, fixing elements and/or hinges according to the present invention are arranged and configured to hinder the foodstuff to leave the insert, preferably the compartment build by spacer elements.

In a preferred embodiment, wherein the at least one fixing element is configured as a hook, preferably a barb hook, the hook structure hinders the foodstuff to swim or float out of the insert, and/or the compartment, where the foodstuff is placed.

In a further advantageous embodiment of the inventive cooking system according to the present invention, the insert, preferably the further positioning element and/or the at least one separating means, comprises at least one lid holding element, preferably suitable for holding a lid of the cooking pot in an at least partially open position.

It is to be understood that the cooking system according to the present invention may comprise a lid to close the cooking pot. Such lid may be placed on top of the cooking pot to close or at least partially close the cooking pot. It may be desired, dependent on the cooking process, that the lid is held in a partially open position, e.g. to let vapor or steam exhaust. More importantly, through such opening formed by the lid held in an at least partially open position a probe, particularly a temperature probe may be inserted. It will be immediately understood by a person skilled in the art, that if the fluid, particularly water, is boiling (thus vapor exhaust reasonable), temperature inhomogeneity is not an issue any more.

According to the present invention, a lid-holding element may thus be provided to hold a lid of the cooking pot in position, particularly in an at least partially open position.

In an embodiment of the cooking system according to the present invention, the cooking system comprises a probe, particularly a temperature probe. Such probe may be provided as a separate or an integral part of the cooking system.

Said lid holding element may be formed as an integral or attachable separate part of the insert and/or its elements. Particularly, such lid-holding element may be an extension of a further positioning element and/or an at least one separating means. For example, such lid-holding element may be higher or adjustable to be higher than the upper rim of the cooking pot. In such case, a lid-holding element would allow to place the lid on top of said lid holding element higher or adjusted to be higher than the upper rim, and thus keeping the lid, at least partially opened. Such configuration may allow, for example, inserting a temperature probe through the resulting gap between lid and cooking pot. The temperature probe may thus be inserted into the fluid, particularly liquid, in order to determine the temperature of said fluid.

In preferred embodiment, the lid-holding element comprises an extension means and/or a spring element.

Accordingly, such lid-holding element, which comprises an extension means, may be adjusted in height. Particularly, if the extension means is configured to extend the height of the lid-holding element. Accordingly, such lid-holding element, which comprises an extension means, may be extendable to fit to all pot heights. Alternatively and/or additionally, a lid-holding element may comprise at least one a spring element. Such spring element may be advantageously applied to keep the lid-holding element in position and/or to exhibit a pushing force to the lid, which is pushed slightly upwards. Such configuration particularly may allow the spring to exhibit a pressure on the lid, which advantageously avoids slipping of the lid. Such spring may thus advantageously provide and/or assist a reliable contact of the lid-holding element to the lid.

In order to improve the contact of the lid holding elements with the lid, the lid-holding element may comprise a lid contact element, preferably manufactured at least partially manufactured, and/or coated or at least partially coated from/with an essentially slip-resistant material.

Such slip-resistant material may be provided, for example, on top of the lid holding elements at the end surface where the lid-holding element is to be in contact with the lid.

In a preferred embodiment, the insert according to the present invention comprises at least one height and/or width adjustment means. Such height and/or width adjustment means allow advantageously to a flexible size of the insert, particularly if being a rack. This advantageously allows adjusting the geometry of the insert to the cooking pots dimensions. Accordingly, the cooking pot dimension, e.g. diameter, instead of the insert size are preferably determining the maximum size of the foodstuff.

In a preferred embodiment, the insert according to the present invention is configured to be flexible and/or adjustable in size, preferably foldable and/or pluggable and/or extendable.

In a preferred embodiment, the insert according to the present invention is configured to be flexible and/or adjustable in height.

By being flexible regarding height the insert, particularly in an embodiment wherein the insert is a rack, can be used in pots with different heights. This means that in higher pots bigger pieces of foodstuff may be prepared using the same insert as with smaller cooking pots and/or smaller pieces of foodstuff.

In a preferred embodiment, the insert according to the present invention is configured such that the diameter of the insert is adjustable to the cross section and/or shape of cross section of the cooking pot.

By being flexible regarding pot diameter, the insert may be used for different pot diameters. By being flexible regarding shape of cross section, it may be used for pots with different geometry, e.g. oval pots, as well.

Such flexibility and/or adjustability particularly facilitates shipping such cooking system and/or insert with a hob. However, also shipment and sale independent from a pot, particularly together with a hob is possible, because it is pot independent and thus suitable for all pots of the customer, eventually with a certain minimum pot diameter or height.

In a preferred embodiment of the present invention, the insert, preferably the further positioning element and/or the at least one separating means, comprises at least one indicator for indicating at least one level of the fluid in the cooking pot.

Such indicator advantageously allows indicating a certain level of fluid, particularly of a liquid, which is or is to be filled in the cooking pot. Such level of fluid may be a minimum fluid level, i.e. e.g. minimal amount of fluid sufficient for the cooking process, a maximum fluid level, i.e. e.g. an amount of fluid not to be exceeded. Such indicator is particularly useful if the insert is configured as a rack.

By using such an indicator, the risk to have a too low level or a too high level of fluid, particularly of water, is reduced. By having a too low level of fluid, the fluid circulation on top of the foodstuff may be reduced and additionally parts of the foodstuff may be located in the colder top layer of the fluid, which may lead to a non-homogeneous cooking result. By having a too high level of fluid, the fluid may swap over the rim of the cooking pot, particularly when the foodstuff is inserted.

Such indicator may be designed and configured to indicate one or more than one fluid level in the cooking pot. For example, the indicator may indicate one filling level, which is the filling level when foodstuff and insert are placed inside the cooking pot. Preferably, the indicator may indicate one or an additional filling level, which is the filling level before foodstuff is placed in the insert. This advantageously allows a customer to fill the fluid volume according to the desired foodstuff and/or cooking process into the cooking pot, before the foodstuff is inserted. In an embodiment the indicator may indicate several filing levels depending on the desired amount or volume of foodstuff to be cooked, or alternatively the indicator may indicate only one filing level, which works for all reasonable amounts of foodstuff. Providing an indicator, which indicates only one filling level, may be advantageous in order not to confuse a customer.

Alternatively, the indicator may indicate several filling levels. One filling level indicated may be the one optimal for a cooking process for food and insert placed inside the cooking pot. Further indicated filling levels may indicate how much fluid, e.g. water, is to be inside the cooking pot, before the foodstuff is placed in the insert. This would allow placing an optimal fluid amount into the cooking pot before the foodstuff is placed in the insert, e.g. allowing a preheating of the fluid without the foodstuff.

It will be immediately understood by a person skilled in the art that given an approximately known cooking pot size, particularly the cross section of a cooking pot. If the volume of the food is known, which may be estimated as approximation 1000 cm³ per kg of foodstuff and dividing a desired volume by cross-section of cooking pot, the change of height of water can be calculated. Particularly, an indicator may comprise indications of the water level for example, for 0.5 kg, 1 kg, 1.5 kg, and 2 kg of foodstuff.

A costumer may be advantageously provided with an easy to follow handling protocol, whereby a certain amount of foodstuff, e.g. 1 kg of food, is assigned to a certain indicator and thus fluid volume, e.g. an indicator displaying "1 kg".

After filling of the desired amount of fluid into the cooking pot, a heating process is started until the desired temperature of the fluid is reached, and then the foodstuff is to be placed to the insert. Such easy to follow protocol may be provided as a look-up table, which indicates and lists the indicator to be used depending on the amount of food to be cooked. This advantageously allows inserting the required amount of fluid before the food is placed and depends on the amount of food, which will be placed.

It is immediately understood that only a rough assumption on the pot size has to be done. The minimum pot diameter is given by the size of the rack. This is the case, as otherwise such rack would not fit inside the pot. Even if the rack is configured to be flexible in size it will have some limitations. The maximum size can be assumed to be only a little bit bigger than the minimum size. This is the case, if such rack is configured to already require cooking pots with a minimum diameter of about 21 cm or even about 24 cm. It will be understood that only very few cooking pots on the market have a much larger diameter, however, also this is possible and an according insert may be provided.

For example, if a round shaped cooking pot with an inner diameter of about 24 cm is used, the cross section is about 452 cm². Thus, per 1 dm³ of foodstuff the water level will increase by approximately 2.2 cm.

It will be immediately understood by a person skilled in the art that providing such indicators is easy in case of only one size of foodstuff. However, also using a group of indicators for different sizes of foodstuffs using a pot with the same distinct size is reasonable. For example, a rod with the indicators may be inclined if the size of the rack is modified. Accordingly, it is in the scope of the invention to provide such group of indicators for different sizes of foodstuffs within one pot of a distinct size. Additionally or alternatively such group of indicators may allow to use the same insert for different pot sizes.

In a further advantageous embodiment of the inventive cooking system according to the present invention, the insert comprises at least one centering element, for positioning of the insert, preferably of the positioning element and/or the at least one further positioning element, relative to a wall, preferably the bottom wall and/or the side wall of the cooking pot.

Such centering element is advantageous in that the insert is held in an optimal position, preferably approximately in the center of the cooking pot.

Such positioning element preferably allows centering the insert in the cooking pot.

Such positioning element may be a spacer element, a bracket, or the like. Preferably, such positioning element is configured as a bracket.

Such centering element advantageously allows positioning the insert optimal for the cooking process and, additionally may allow adjusting the insert to various cooking pot diameters. For example, such centering elements may comprise edges, preferably hinged, on a further positioning element.

Such edges may lead to a closed surface of a top element. Such configuration may be advantageous in reducing heat loss to the top.

Additionally or alternatively the centering elements may comprise or be configured as a bracket for centering of the insert, particularly of a top element.

Additionally or alternatively, the centering elements may be configured as a grid. Such configuration would advantageously create a distance to the pot walls, particularly the sidewalls. Such girds may be configured to protrude from the insert towards at least one wall of the cooking pot and may be configured flexible and/or extendable and/or adjustable.

Additionally or alternatively, the insert, particularly the at least one centering element for positioning of the insert relative to a wall, comprises at least one buoyancy element, particularly having a density less than the fluid and/or at least one lowering element, particularly having a density higher than the fluid,

Wherein, preferably the lowering element comprises a magnetic element.

Such buoyancy element may be formed as an integral or separate part of the insert and may be attached to the insert, e.g. by a wiring means or a grid, advantageously allowing a buoyancy of the insert in the fluid, particularly the liquid. Accordingly, a lowering element may be formed as an integral or separate part of the insert and may be attached to the insert, e.g. by a wiring means or a grid, advantageously allowing a sinking of the insert in the fluid, particularly the liquid.

Additionally or alternatively, the centering means may be or comprise a magnetic element. This advantageously allows to magnetically attaching the insert to a wall, particularly to the bottom wall, of the cooking pot, such that the distance from the insert to said wall is essentially fixed.

In a particularly preferred embodiment of the present invention the cooking system, further comprises a probe, particularly a temperature probe.

Such probe, particularly a temperature probe, is advantageous in assessment and control of fluid parameters, e.g. temperature of the fluid. Such probe, particularly a temperature probe, may be connectable to the kitchen hob, particularly the power circuit and/or control unit of such kitchen hob. Accordingly, control of the fluid parameter, particularly temperature, may be achieved directly by the control unit of the kitchen appliance as such.

Various probes are known to the person skilled in the art and considered herein. For example, temperature probes may be based on surface-acoustic-wave or SAW, radio-frequency identification or RFID, or thermocouples.

It is to be understood that a temperature probe based on systems like SAW particularly allow a proper and precise measurement of the temperature inside the cooking pot, i.e. of the fluid and/or of the foodstuff. A probe based on systems like RFID or RFID subsystems may also advantageously be integrated in the cooking pot.

Particularly, the probe may be a wireless probe, preferably suitable for temperature measurement.

A probe according to the various embodiments of the present invention may be used to determine and/or control a parameter of the fluid, particularly temperature. Alternatively, such probe may also be configured as a food probe injectable into the foodstuff and capable of measuring a temperature within the piece of foodstuff. In an embodiment of the cooking system according to the present invention a first probe for measuring a parameter, particularly temperature, of the fluid is used for temperature control in sous vide processes, and a second probe may be placed inside the piece of foodstuff, for the control of the temperature within the piece of foodstuff, which would also reflect a control of optimal cooking duration. Particularly for sous-vide cooking processes, however, which are relatively long cooking processes, and which are not very sensitive to duration - by contrast being very sensitive to temperature differences, such first probe for measurement and/or control of the temperature of the fluid may be sufficient. For other processes, different from sous-vide cooking processes, however, such second probe for measurement of temperature within the piece of foodstuff and/or control of cooking duration may be of advantage.

Particularly, a SAW probe may result in an advantageous control of temperature during the cooking process, being of particular advantage in connection with a sous vide cooking process, more particularly providing a temperature control.

In a particularly preferred embodiment of the cooking system according to the present invention the insert is fixed and/or attached to the probe, particularly temperature probe.

Such configuration allows providing a cooking system with integrated temperature control or temperature assessment. The insert may comprise such probe as an integral part or the probe may attachable to the insert.

Particularly a temperature probe as described herein in connection with the various embodiments of the present invention may be a temperature probe capable of indicating a temperature to the user and/or to the appliance, particularly the control board of a kitchen appliance, e.g. the kitchen hob.

Such temperature probe may be manufactured, at least partially, from a thermochromic material, by a bi-metal or some SMA, i.e. shape memory alloy.

Such temperature probe may be configured according to any conventional thermometer, for example, with a fluid that expands when heated up or a similar working principle.

Such temperature probe may be provided with markings for top and bottom if not obvious, and/or markings for a maximum and/or minimum immersion depth.

Preferably, particularly if the probe is provided fixed to the insert, it is considered to configure insert, probe, lid and/or kitchen pot such that the probe is surrounded essentially by a free space around the probe, in order to allow essentially unhindered circulation of the fluid.

The present invention, particularly if the temperature probe is provided with or fixed to the insert in the cooking system according to the present invention provides a cooking system capable of proper temperature readings for the application sous vide cooking processes on a kitchen hob.

In a further advantageous embodiment of the inventive cooking system according to the present invention, the insert, preferably the at least one positioning element and/or the at least one further positioning element, comprises at least one probe positioning element for positioning a probe, preferably a temperature probe.

Such probe-positioning element advantageously allows adjusting or fixing the position of the probe in a position where the probe measurement is optimal or at least standardized.

The cooking system according to the present invention provides a cooking system, particularly suitable for sous vide cooking process, which allows a more homogeneous temperature distribution during the cooking process as well as a higher accuracy of temperature control. Particularly, the latter may also be advantageously achieved by using a defined location, where to measure the temperature. Therefore, a probe positioning element, e.g. a probe holder, may be advantageously provided.

For this purpose, the insert, preferably the at least one positioning element and/or the at least one further positioning element, and more preferably a base plate, may be equipped with such probe positioning element, e.g. in the form of a grid or parts suitable to fix the sensor at a certain position. Such probe-positioning element preferably is suitable for positioning of the sensor or a food probe and is in particular useful if it is in combination with food positioning. Accordingly, the present invention provides a cooking system where foodstuff and probe may be in a well-defined and preferably fixed or at least predetermined position. Particularly, both foodstuff and probe may be placed in such a manner, that the water circulation around the probe is not hindered by the food, which otherwise could affect the measurement. For example, cold food or even frozen food would not have a big impact on the measurement, if there is sufficient circulation of water.

By fixing the sensor position, the temperature measurement occurs at a well-defined position. Thus, the probe and thus the probe-positioning element may advantageously placed such that the probe is placed, where the average temperature is expected to be. Alternatively to a place with average temperature, the probe may be placed in a position where not the average but a temperature with a known deviation from the average temperature can be expected, e.g. close to pot bottom, where the highest temperature is achieved.

Accordingly, in such configuration and particularly when using the probe positioning element for positioning of the probe, an inhomogeneity of the fluid distribution does not essentially affect the accuracy of the measurement, particularly of the control algorithm. A person skilled in the art will acknowledge that as long as the distribution of the temperature is known or can be predicted such measurement is still appropriate.

In a preferred embodiment of the present invention the at least one probe positioning element for positioning a probe, is configured and positioned such that the circulation of the fluid around the probe positioning element and/or the probe is essentially undisturbed and/or wherein the at least one probe positioning element for positioning a probe, is configured and positioned such that a heat conduction from the insert to the probe is kept essentially low.

In other words, the probe-positioning element is configured such that the heat conduction from the rest of the insert to the probe sensor is low. The probe-positioning element is further preferably designed in such a way, that the water circulation around the food probe is not influenced significantly.

Preferably, the probe-positioning element is configured and arranged such that insert and/or the foodstuff and/or probe may be removed easily from the cooking pot.

Preferably, the probe positioning element, the insert, particularly configured as a rack, and the probe, particularly if fixed to the insert, are configured and arranged such that the cooking system, configured preferably as an assembly unit, comprising the probe, may be taken or pulled out of the cooking pot together, e.g. by pulling on the probe or probe handle. Accordingly, the probe, and particularly the probe-positioning element is configured and arranged such that the assembly unit is stable enough to withstand stronger forces transferred.

In a preferred embodiment, the insert comprises at least one handle element, preferably manufactured from a material having an essentially low heat capacity and/or low heat conductivity, e.g. silicone or the like.

Such handle element, advantageously allows pulling out the insert avoiding direct contact to the fluid, particularly if heated fluid, particularly liquid. Such handle element at least partially manufactured from a material having an essentially low heat capacity and/or low heat conductivity advantageously provides a handle element, which is cooler than the fluid at the end or during a cooking process.

Additionally or alternatively, such handle element may be at least partially provided with a heat insulating material.

Such measures advantageously reduce the risk of the user of being burned, particularly if the handles are additionally touched without gloves.

Such handle element may be also provided with highlighted markings, e.g. may be provided in a color different to the insert.

Additionally or alternatively, the handle elements may be configured to be removable attached to the insert.

In an embodiment, the handle elements comprise a recess and/or hook structure, which may be used to engage said handle elements with a tool, e.g. a cooking spoon or the like, in order to remove the insert safely from the cooking pot. Particularly, such Shape of the handle element may be advantageously used to be engaged with a tool, e.g. a cooking spoon, which may be passed through the handle element, particularly through the recess and/or hook structure of said handle element, such that the insert can be removed from the cooking pot with the cooking spoon or similar tool.

In an embodiment, the handle elements and/or such recess and/or hook structure, is configured such that the insert by operating, e.g. pulling, said handle element can be removed from the cooking pot by one single hand.

In a preferred embodiment of the cooking system according to the present invention, the handle elements are ordinary handles, preferably provided at the top of the insert such that the handle elements protrude out of the fluid.

In an alternative preferred embodiment of the cooking system according to the present invention, the handle elements are provided in form of at least one wiring means, particularly a wire. Such wiring means may be fixed at least at one side of the insert to the insert, preferably at a position below the fluid surface, for example, at an eyelet provided at the insert, preferably below the fluid surface. Such wiring may be arranged at its second end outside of the cooking pot, preferably comprising a handle to pull the wiring. Alternatively or additionally, the wiring may be attached to and/or guided by a centering means. Such centering means may comprise at least one hook attachable to an upper rim of the cooking pot and/or an eyelet for passing and/or guiding such wiring means. Alternatively or additionally, such centering means may be configured as a lever suitable to lift the insert over the fluid level.

By pulling the wiring, particularly over the rim of the cooking pot, the insert is lifted out of the fluid, particularly to a level at least partially higher than the fluid level. Hence, the foodstuff may be taken out of the insert without the risk of direct contact with the fluid.

Thus, a mechanism is provided, which allows raising the insert and in particular the foodstuff partly above the fluid level in order to make it easier to be removed by hands.

Such handle elements, particularly in the form of such wiring means, may be advantageously combined in particular with centering elements and/or lid holding elements.

An eyelet may be advantageously positioned at the insert at a contact point located significantly below the highest point of the insert but above the mass center of the insert. This facilitates a lifting of the insert when operating the wiring means.

In a preferred embodiment, the insert comprises a locking mechanism suitable to hold the insert in a lifted or raised position.

In a preferred embodiment, the at least one handle element, is configured as an integral or removable part of the insert.

Preferably, the insert and/or parts thereof are manufactured at least partially from a material selected from the group comprising steel, aluminum, plastic, silicone, or Teflon layer, or a combination thereof.

Preferably, the cooking system, particularly the insert, is manufactured suitable to be cleaned in a dishwasher.

It will be immediately understood that the cooking system according to the present invention may also be advantageously suitable for use in a steam cooking process. For example, if foodstuff may be held in a position e.g. 2 cm distant from and/or above the pot bottom, sufficient water may be filled in the pot to create steam and only let the steam have contact with the food.

The above-described problems are also advantageously solved by an insert for a cooking system according to the present invention.

The above-described problems are also advantageously solved by a cooking pot for a cooking system according to the present invention, preferably comprising an insert according to the present invention.

A cooking pot according to the present invention is thus not limited to the design of an ordinary cooking pot. Various designs of cooking pots are comprised and considered by the present invention, comprising different forms and designs, being of general round shape or having edges, e.g. four edges, having different height or diameter, comprising ordinary cooking pots, casseroles, woks, or the like.

Preferably, a cooking pot according to the present invention may comprise an insulation means, e.g. an insulated layer. Such insulated pot may exhibit a lower heat loss through the walls and the lid and a lower inflow of heat. Such effect would be advantageous for a higher homogeneity of the temperature the fluid within the cooking pot.

The above-described problems are also advantageously solved by a lid for a cooking system according to the present invention, preferably comprising an opening for placing the probe.

A lid according to the present invention may preferably comprise an opening. Such opening may be suitable to introduce a probe, particularly a food probe to reduce vaporization, which usually occurs with an open lid. This will also reduce the inhomogeneity of temperature distribution. Such opening may be provided with an insulating lip to reduce further vaporization.

The above-described problems are also advantageously solved by use of a cooking system and/or a cooking pot and/or an insert in a sous-vide cooking process,
wherein the cooking system is a cooking system according to the present invention and/or
wherein the cooking pot is a cooking pot according to the present invention and/or
wherein the insert is an insert according to the present invention.

All described embodiments of the invention have the advantage, that sous vide cooking can be carried out on kitchen hob. Particularly the present invention allows the creation of a more homogeneous heat distribution inside the fluid, particularly the liquid, in the cooking pot, particularly useful for sous-vide cooking process. Further means are provide which allow advantageous placement of foodstuff and/or a probe. Particularly, the present invention provides a cooking system and parts thereof, particularly useful for sous-vide cooking process on a kitchen hob and advantageous for positioning of foodstuff, positioning of probe, easy to handle, and influencing water circulation.

The present invention will be described in further detail with reference to the drawings from which further features, embodiments and advantages may be taken, and in which:
- Figure 1: shows a schematical cross-sectional side view of a cooking system according to the present invention according to a first inventive embodiment;
- Figure 2: shows a schematical cross-sectional side view of a cooking system according to the present invention according to a second inventive embodiment;
- Figure 3: shows a schematical top view of a cooking system according to the present invention according to a third inventive embodiment;
- Figure 4: shows a schematical cross-sectional side view of a cooking system according to the present invention according to a fourth inventive embodiment;
- Figure 5: shows a schematical cross-sectional side view of a cooking system according to the present invention according to a fifth inventive embodiment;
- Figure 6: shows a schematical cross-sectional side view of a cooking system according to the present invention according to a sixth inventive embodiment;
- Figure 7: shows a schematical cross-sectional side view of a cooking system according to the present invention according to a seventh inventive embodiment;
- Figure 8: shows a schematical cross-sectional side view of a cooking system according to the present invention according to a eighth inventive embodiment;
- Figure 9: shows a schematical cross-sectional side view of a cooking system according to the present invention according to a ninth inventive embodiment;
- Figure 10: shows a schematical cross-sectional side view of a cooking system according to the present invention according to a tenth inventive embodiment;
- Figure 11: shows a schematical cross-sectional side view of a cooking system according to the present invention according to an eleventh inventive embodiment;
- Figure 12: shows a schematical cross-sectional side view of a cooking system according to the present invention according to a twelfth inventive embodiment;
- Figure 13: shows a schematical cross-sectional side view of a cooking system according to the present invention according to a thirteenth inventive embodiment;
- Figure 14: shows a schematical cross-sectional side view of a cooking system according to the present invention according to a fourteenth inventive embodiment;
- Figure 15: shows a schematical cross-sectional side view of a cooking system according to the present invention according to a fifteenth inventive embodiment;
- Figure 16: shows a schematical cross-sectional side view of a cooking system according to the present invention according to a sixteenth inventive embodiment;
- Figure 17: shows a schematical cross-sectional side view of a cooking system according to the present invention according to a seventeenth inventive embodiment;
- Figure 18: shows a schematical cross-sectional side view of a cooking system according to the present invention according to a eighteenth inventive embodiment; and
- Figure 19: shows a schematical cross-sectional side view of a cooking system according to the present invention according to a nineteenth inventive embodiment.

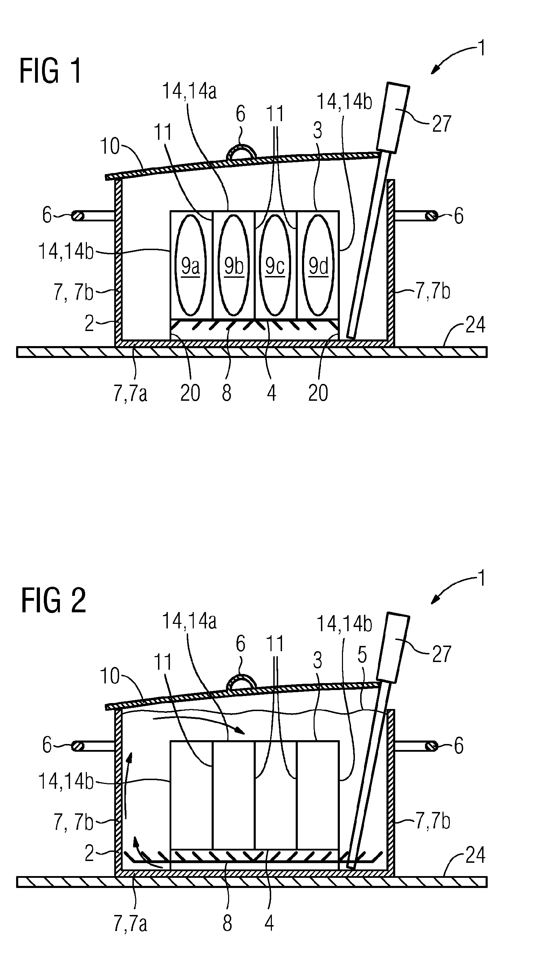

In Fig. 1 a schematical cross-sectional side view of a cooking system according to the present invention is shown. Such cooking system 1 is particularly suitable for a cooking process of at least one piece of foodstuff 9, which may be placed in the cooking pot 2. Such cooking system 1 comprises a cooking pot 2, and an insert 3 suitable for positioning of at least one piece of foodstuff 9. Particularly, such cooking system 1 is suitable for a sous-vide cooking process, particularly for cooking vacuum packaged foodstuff 9. Said cooking pot 2, here of a common round shape, comprises sidewalls 7, 7b provided with handles 6 for holding the cooking pot 2, and to put the cooking pot 2 onto a hob or stove 24 to be heated. To control temperature a temperature probe 27 may be inserted into the cooking pot 2. The cooking pot 2 may be closed by a lid 10, which may also comprise a handle 6 to lift the lid 10 or put the lid 10 onto the cooking pot 2.

The insert 3 is arranged in said cooking pot 2, and comprises a positioning element 4 for positioning the foodstuff 9, 9a, 9b, 9c and/or 9d such that a fluid 5 fillable or filled into the cooking pot 2 can circulate around the foodstuff 9. A cooking pot 2 with fluid 5 is exemplarily shown in Figs. 2, 3, 5, 6, 13, 14, 15, 16, and 17. In the embodiment shown in Fig. 1 the positioning element 4 configured as a base plate 4. The insert 3 shown in Fig. 1 further comprises at least one further positioning element 14 for positioning a foodstuff 9. Such further positioning element 14 may be provided as side elements 14b, for example of a grid. In Fig. 1 four pieces of foodstuff 9, namely 9a, 9b, 9c and 9d are positioned in the insert 3. However, the cooking system 1 may advantageously also be used with only one or varying numbers of pieces of foodstuff. Furthermore, separating means 11, which may be removably attached to the insert 3, may be provided for separating several pieces of foodstuff 9a, 9b, 9c, and 9d, respectively. As shown in Fig. 1 each piece of foodstuff 9a, 9b, 9c, and 9d, respectively is separated from the other pieces by such separating means 11. Such separating means 11 therefore allow to divide the space of the insert 3 into compartments, where different pieces of foodstuff, here four, i.e. 9a, 9b, 9c and 9d, may be cooked in parallel. The insert 3 may further comprise a further positioning element 14, for example a top element 14, 14a, configured as a top plate or a part of a grid. Such top element 14, 14a may particularly be located in proximity to the upper opening and/or upper area of the cooking pot, and may be arranged in parallel to said upper fluid surface. Such top element 14 may prevent pieces of foodstuff9 from floating, and/or may improve the structural stability of the insert 3.

The insert 3, particularly the base plate 4 comprises a fluid circulation enhancing means 8, provided as a part of said base plate 4, arranged below the baseplate 4 in the form of inclined plates 8. As may be immediately seen from Fig. 1, said fluid circulation enhancement means 8 advantageously allows redirection of the fluid heated at the bottom of the cooking pot 2, and is suitable for an enhancement of circulation of said fluid 5 in said cooking pot 2. The base plate 4 is located in proximity to the bottom wall 7a of the cooking pot 2, arranged in parallel to said bottom wall 7a. Said base plate comprises foot elements, which also serve as centering elements 20 for positioning the insert 3 spaced relative to the bottom wall 7a of the cooking pot 2. A fluid 5 fillable into the cooking pot 2, as for example, shown in Figs. 2, 3, 5, 6, 13, 14, 15, 16, and 17, may be heated and the baseplate 4 on its foot elements 20 provides space to the bottom wall 7, 7a of the cooking pot 2. The base plate 4 may also additionally or alternatively comprise further fluid circulation enhancement means 8.

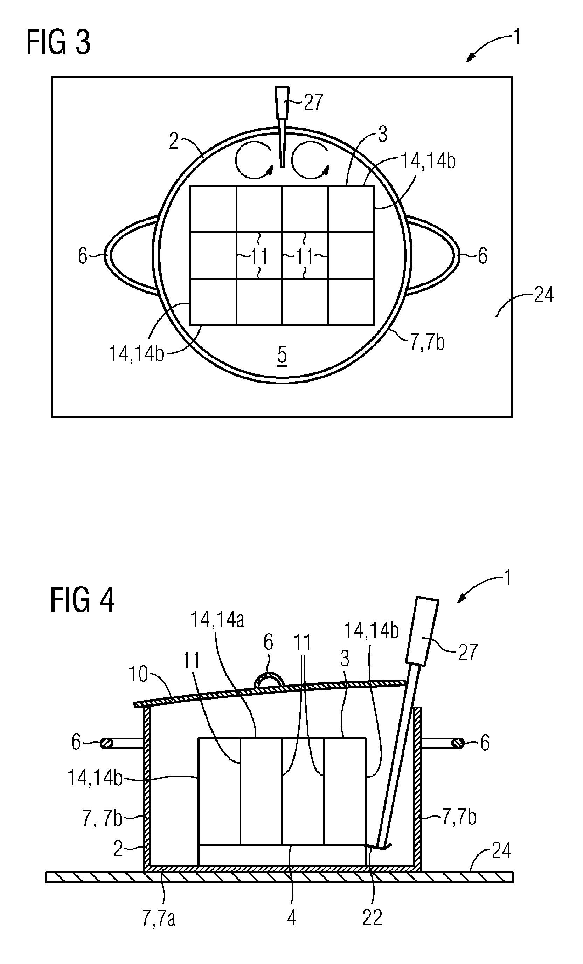

As may be seen from Fig. 2 the insert 4 may also comprise a fluid circulation enhancement means 8, here inclined plates, separate from the positioning element 4, which also advantageously allow redirection of the fluid 5 heated at the bottom of the cooking pot 2. As indicated by the arrows, the flow of said heated fluid 5 is directed towards the side walls 7,7b of the cooking pot 2, advantageously allowing for a more homogeneous temperature distribution within the fluid 5. This may also be taken from Fig. 3, which shows the advantageously enhanced circulation of the fluid 5 in proximity to the side wall 7, 7b of the cooking pot 2, indicated by the arrows. Additionally or alternatively, such cooking system 1, particularly the insert 3, may further comprise a probe positioning element 22 as, for example shown in Fig. 4. Such positioning of the probe 27, particularly a temperature probe 27, allows for a more precise determination and/or control of temperature within the fluid 5, as the position of said probe 27 is always kept the same, particularly at a known and predetermined position. As may be taken from Fig. 4 the probe-positioning element 22 is provided as a support structure, particularly a supporting surface, for placing the tip of the probe 27.

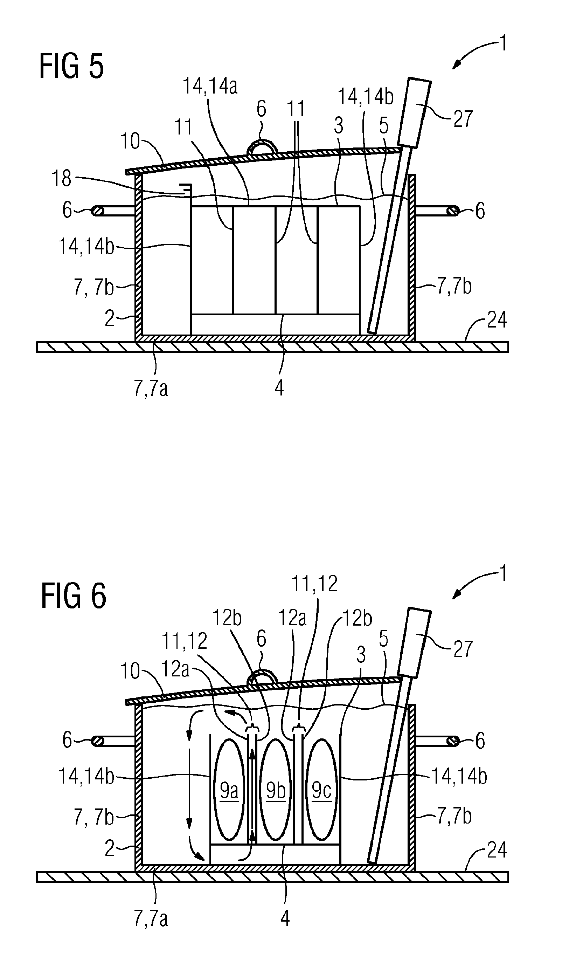

Additionally or alternatively, such cooking system 1 may also comprise a fluid level indicator 18, as shown in Fig. 5, here arranged at the top element 14, 14a, which advantageously allows to indicate a desired volume of fluid 5 within the cooking pot 2. Here, the insert 3, preferably the further positioning element 14 and/or the at least one separating means 11, comprises at least one indicator 18 for indicating at least one level of the fluid 5 in the cooking pot 2. The fluid level indicator 18, as shown may comprise different indicators for different filling levels of the fluid 5 within the cooking pot 2, which may arranged dependent on the size, volume and/or number of piece(s) of foodstuff 9 to be cooked.

As may be best seen from Fig. 6, the insert may comprises spacer elements 12a and 12b, which may also be part of or serve as separating means 11. Such separating means 11 allow to divide the space of the insert 3 into compartments, where different pieces of foodstuff, here three, i.e. 9a, 9b and 9c, may be cooked in parallel. Advantageously between adjacent spacer elements 12a and 12b a space is kept, which allows the fluid 5 to circulate relatively free also in between to different pieces of foodstuff. However, also a single element with two walls and a fixed space between these two walls may be used as well. More particularly, the at least one separating means 11 comprises at least one first spacer element 12a and at least one second spacer element 12b, wherein the at least one first spacer element 12a and the at least one second spacer element 12b are arranged spaced to each other, and the at least one first spacer element 12a and the at least one second spacer element 12b are configured as parallel grids, wherein the at least one first spacer element 12a and the at least one second spacer element 12b are arranged such that a distance between the at least one first spacer element 12a and the at least one second spacer element 12b is at least 5 mm, at least 4 mm, or at least 3 mm.

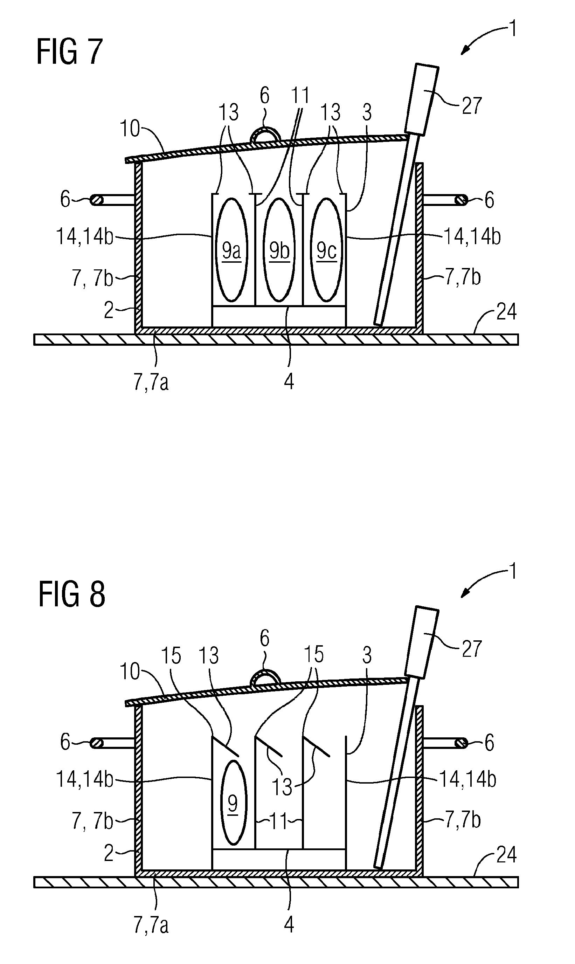

A shown in Fig. 7 the cooking system 1 according to the present invention, particularly the insert 3, preferably the at least one further positioning element 14, and/or the at least one separating means 11, preferably the at least one first spacer element 12a and/or the at least one second spacer element 12b, comprises at least one fixing element 13, which advantageously holds the foodstuff 9a, 9b or 9c in place. However, it is to be understood that alternatively the two positioning elements 14, 14b without additional separating means 11 or spacer elements 12a or 12b may be configured and arranged to be sufficient to hold the foodstuff 9 in the right position. As may be seen from Fig. 7, the fixing elements 13 may be an integral bended section of the insert 3, particularly of the side elements 14,14b and/or separating means 11. Such fixing element 13 hinders the foodstuff to float out of the insert 3.

From Fig. 8 it is apparent that such fixing element 13 may also be hinged to the insert 3, particularly to the side element 14b and/or to the separating means 11 by a hinge element 15, which may be a flexible material, or a classical hinge. This allows to open or close the compartment, where the foodstuff 9 is placed.

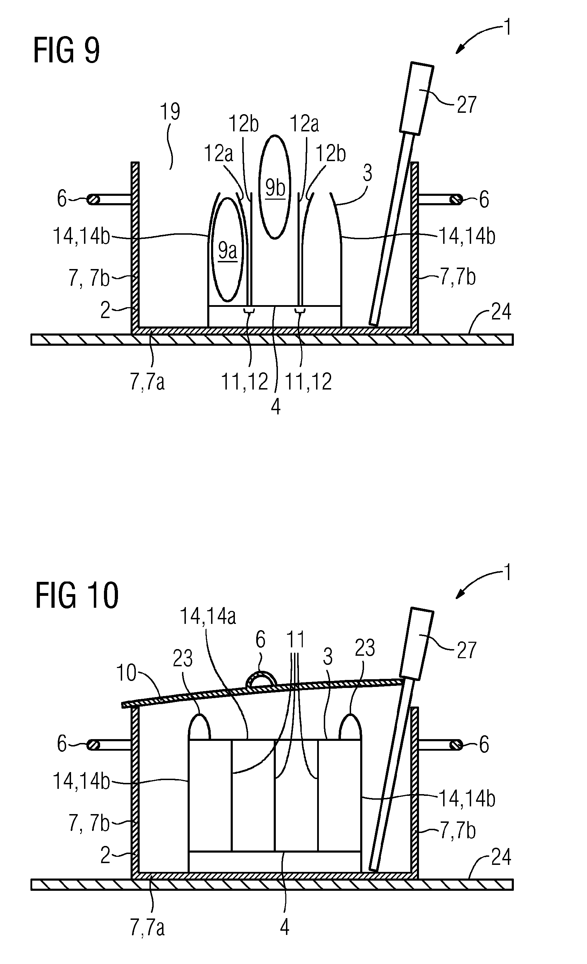

As may be taken from Fig. 9 the separating means 11 and/or the spacer elements 12a, 12b may be at least partially of a flexible or bendable material. This may provide a tong-like structure for holding the foodstuff 9, 9a, 9b or 9c in place and prevents the foodstuff form floating. The separating means 11 and/or the spacer elements 12a, 12b may be also adjustable in length and/or shape.

Fig. 10 shows an embodiment according to which the insert 3 comprises at least one handle element 23, which may be manufactured from a material having an essentially low heat capacity and/or low heat conductivity, e.g. silicone or the like. Such handle element 23, here in the form of two silicone covered handles 23, advantageously allows safe and easy removing of the insert 3, also with the foodstuff 9 within, from the cooking pot 2.

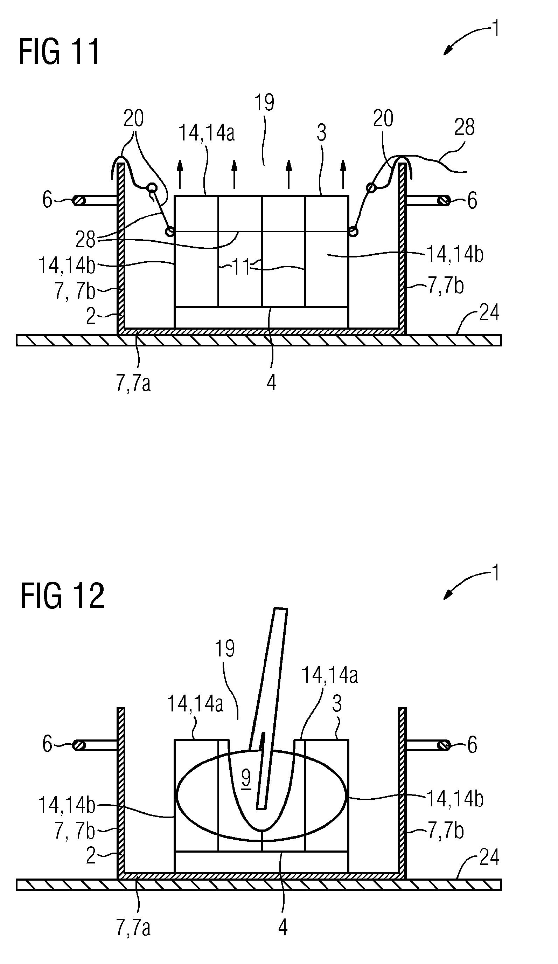

According to the embodiment shown in Fig. 11, the cooking system 1 according to the present invention may comprise a wiring means 28, particularly a wire. Such wiring means 28 may be fixed at least at one side of the insert 3 to the insert 3, preferably at a position below the fluid surface, for example, at an eyelet provided at the insert, preferably below the fluid surface. Such wiring 28 may be arranged at its second end outside of the cooking pot 3, preferably comprising a handle to pull the wiring. Alternatively or additionally, the wiring 28 may be attached to and/or guided by a centering means 20. The cooking system 1 according to the shown embodiment, particularly the insert 3 comprises at least one centering element 20, for positioning of the insert 3, preferably of the positioning element 4 and/or the at least one further positioning element 14, relative to a wall 7, preferably the bottom wall 7a and/or the side wall 7b of the cooking pot 2.Such centering means 20, as shown in Fig. 11, may comprise at least one hook attachable to an upper rim of the cooking pot and/or an eyelet for passing and/or guiding such wiring means. It is apparent from Fig. 11 that by pulling the wiring 28, particularly over the rim of the cooking pot 2, the insert 3 is lifted out of the fluid, particularly to a level at least partially higher than the fluid level. Such lifting is indicated as arrows in Fig. 11. Hence, the foodstuff 9 may be taken out of the insert 3 without the risk of direct contact with the fluid 5.

Form the embodiment shown in Fig. 12, it is apparent that the insert 3 according to the present invention may be configured such that it is obvious for a user, how to place the foodstuff 9, here a relatively large foodstuff 9, in it, particularly if configured as a rack. Such insert, particularly such rack, for example, may comprise a recess structure, or may be formed as a basket. Such insert, particularly such rack, may comprise, preferably at an upper edge, a reception structure for receiving said foodstuff 9. For example, a region, preferably a central region, of said upper edge may be lowered facilitating foodstuff placement.

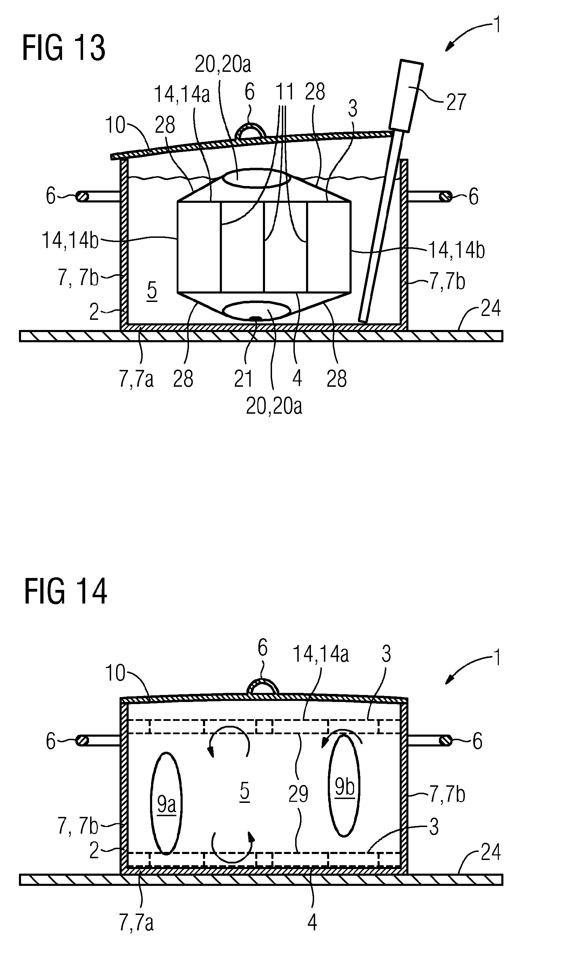

According to Fig. 13, the insert 3, particularly the at least one centering element 20 for positioning of the insert 3 relative to a wall 7, may comprise at least one buoyancy element 20a, particularly having a density less than the fluid and/or at least one lowering element 20b, particularly having a density higher than the fluid 5, wherein, preferably the lowering element 20b comprises a magnetic element 21. Such buoyancy element 20a may be formed as an integral or separate part of the insert 3 and may be attached to the insert 3, e.g. by a wiring means 28 or a grid, advantageously allowing a buoyancy of the insert 3 in the fluid 5, particularly the liquid. Accordingly, a lowering element 20b may be formed as an integral or separate part of the insert 3 and may be attached to the insert3, e.g. by a wiring means 23 or a grid, advantageously allowing a sinking of the insert 3 in the fluid 5, particularly the liquid. Additionally or alternatively, the centering means 20, particularly the lowering element 20b may be or comprise a magnetic element 21. This advantageously allows to magnetically attaching the insert 3 to a wall 7, 7a, particularly to the bottom wall 7a, of the cooking pot 3, such that the distance from the insert 3 to said wall 7, 7a is essentially fixed.

A cooking system 1 according to the present invention may also comprise a floating top plate 14, 14a as a further positioning element and a more heavy base plate 4 as a positioning element. In order to create space between the fluid 5 and a pot bottom wall 7, 7a, and/or a liquid surface, said base plate 4 and/or said top plate 14 may comprise a gird 29, arranged spaced to the respective plate 14 or 4. As may be seen from Fig. 14 such grid 29 may comprise further fluid enhancing means, in form of separators, channels or the like, which advantageously enhances circulation of the fluid 5, as indicated by the arrows in Fig. 14. Here the grid 29 is arranged spaced to the respective plate 14 or 4, respectively. More particularly, the insert 3, in such design also limits the floating of the foodstuff 9, 9a, 9b.

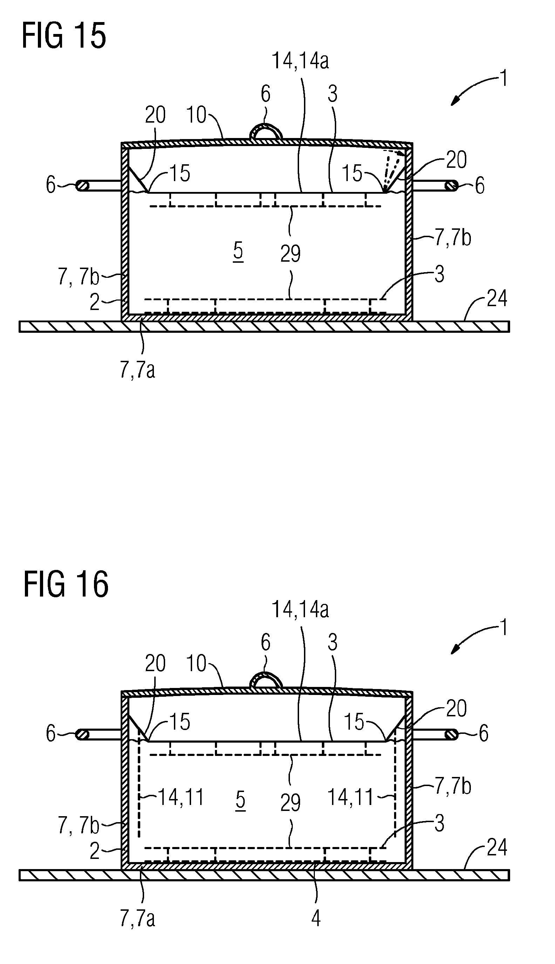

As shown in Fig. 15, also a plate-like, particularly plate, positioning element, particularly a top plate as a further positioning element 14, may comprise a centering means 20. Such centering means 20 may be, for example, formed as an integral part of the insert 3, particularly as a distance piece 20, which allows centering the insert 3 relative to the pot geometry, particularly relative to the side walls 7, 7b of the cooking pot 2. Such centering means 20, may be hinged with a hinge element 15, or at least partially build by a flexible material, which allows for flexibility regarding the diameter of the cooking pot 2.

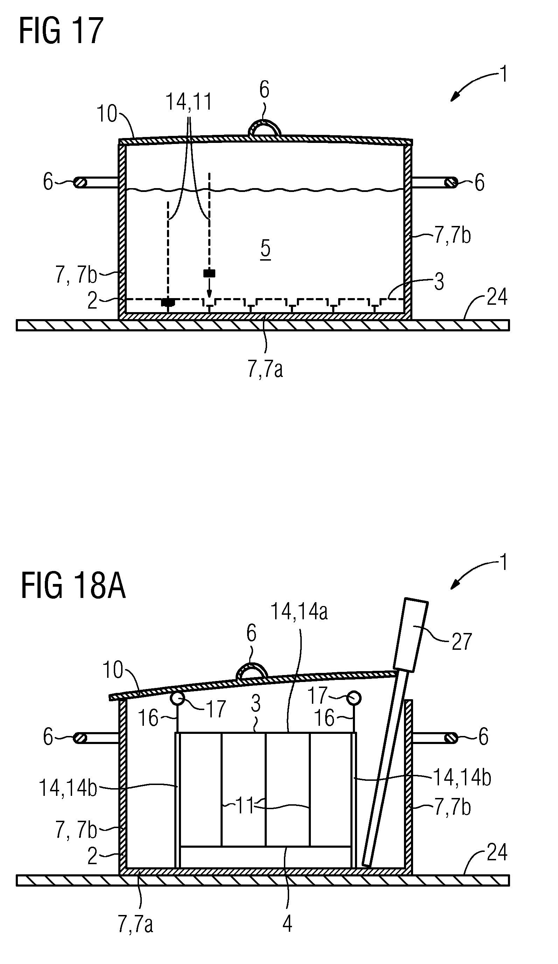

As shown in Fig. 16 and 17 also with a top element 14, 14a and a base plate contact of the foodstuff to the side walls, which usually are colder than the desired temperature, may be avoided by addition of separating means 11 and/or positioning elements 14. The foodstuff thus will not be located in direct contact with the side walls. For this purpose, separating means 11 and/or further positioning elements 14, which create a space to the side walls 7,7b may be added. Separating means 11 and/or further positioning elements 14 may be added, e.g. as side grids, which may be formed as integral or separate part. For example, as shown in Fig. 16, such side grids may be formed as integral parts of the centering elements 20, or, as for example shown in Fig. 17, may be formed as separate parts, which can be inserted by purpose. For the latter, the insert 3, particularly, the base plate or the top element may comprise receiving structures, e.g. slots or the like, to receive and support such side grids.

Such side grids may be connected to the top and/or to the base plate.

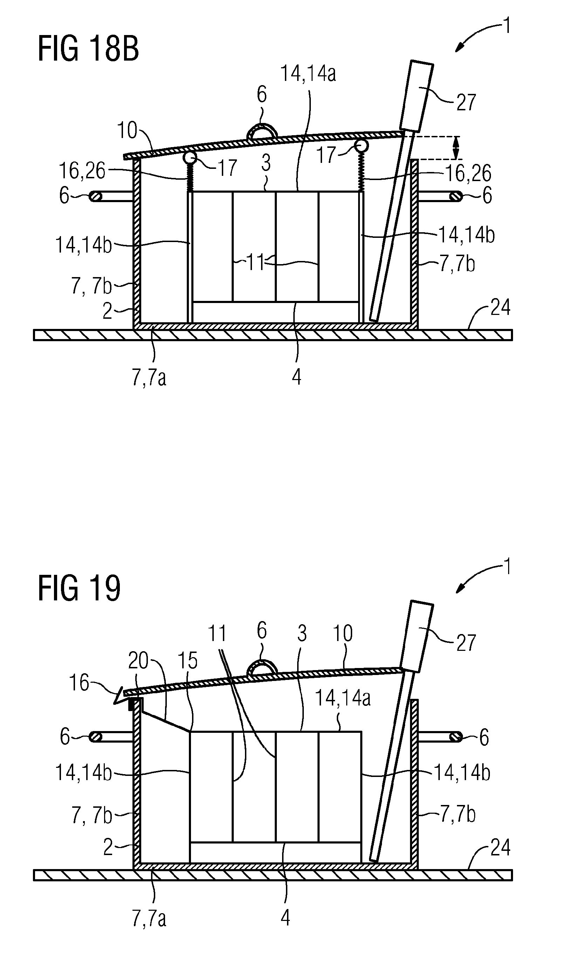

As may be taken from Fig. 18 the cooking system 1 according to the present invention, particularly the insert 3, preferably the further positioning element 14 and/or the at least one separating means 11, may comprise at least one lid holding element 16, preferably suitable for holding a lid 10 of the cooking pot 2 in an at least partially open position. The lid 10 provided to close the cooking pot 2 may be placed on top of the cooking pot 2 to close or at least partially close the cooking pot 2. It may be desired, dependent on the cooking process, that the lid 10 is held in a partially open position, e.g. to let vapor or steam exhaust.Although such exhaust may not be desired for several cooking processes, however, desired for others, as water may even vaporize even at temperatures below the boiling point. It is to be noted, that if the sensor is placed inside the pot without such element, there would be a gap between the lid and the pot anyway, however, also the risk that the lid falls down and/or damages the sensor 27. Therefore, through such opening formed by the lid 10 held in an at least partially open position a probe 27, particularly a temperature probe may be inserted and secured from damage by the lid. It will be immediately understood by a person skilled in the art, that if the fluid 5, particularly water, is boiling (thus vapor exhaust reasonable), temperature inhomogeneity is not an issue any more. According to the present invention, a lid-holding element 16 may thus be provided to hold a lid 10 of the cooking pot 2 in position, particularly in an at least partially open position, a shown in, for example, in Fig. 18. As shown in Fig. 18, the lid holding element 16 may be formed as an integral or attachable separate part of the insert 3 and/or its elements. Particularly, such lid-holding element 16 may be an extension of a further positioning element 14, 14b and/or an at least one separating means 11. For example, such lid-holding element 16 may be higher or adjustable to be higher than the upper rim of the cooking pot 2. In such case, a lid-holding element 16 advantageously allows to place the lid 10 on top of said lid holding element 16 higher or adjusted to be higher than the upper rim, and thus keeping the lid 10, at least partially opened. Such configuration may advantageously allow, for example, inserting a temperature probe 27 through the resulting gap between lid 10 and cooking pot 2. The temperature probe 27 may thus be inserted into the fluid 5, particularly liquid, in order to determine the temperature of said fluid 5. According to the shown embodiment, the lid-holding element 16 comprises an extension means 25 and a spring element 26. Accordingly, such lid-holding element 16, may be adjusted in height. According to the shown embodiment the extension means 25, may be extendable to fit to all pot heights. Alternatively and/or additionally, a lid-holding element 26 may comprise at least one a spring element 26. Such spring element 26 may be advantageously applied to keep the lid-holding element 16 in position and/or to exhibit a pushing force to the lid 10, which is pushed slightly upwards. Such configuration particularly may allow the spring 26 to exhibit a pressure on the lid 10, which advantageously avoids slipping of the lid 10. It is to be noted, that if the sensor is placed inside the pot without such element, there would be a gap between the lid and the pot anyway, however, also the risk that the lid falls down and/or damages the sensor 27. Such spring 26 may thus advantageously provide and/or assist a reliable contact of the lid-holding element 16 to the lid 10. In order to improve the contact of the lid holding elements 16 with the lid 10, the lid-holding element 16 may comprise a lid contact element 17, preferably manufactured at least partially manufactured, and/or coated or at least partially coated from/with an essentially slip-resistant material. As may be best seen from Fig. 19, a lid holding element 16 may also be part of or combined with a centering element 20, which may also be hinged by a hinge element 15 to the insert 3.

The features of the present invention disclosed in the specification, the claims, and/or the figures may both separately and in any combination thereof be material for realizing the invention in various forms thereof.

### List of reference numerals

- 1: cooking system
- 2: cooking pot
- 3: insert
- 4: positioning element
- 5: fluid
- 6: handle
- 7: wall
- 7a: bottom wall
- 7b: side wall
- 8: fluid circulation enhancing means
- 9, 9a, 9b, 9c: foodstuff
- 10: lid
- 11: separating means
- 12, 12a, 12b: spacer element
- 13: fixing element
- 14: further positioning element
- 14a: top element
- 14b: side element
- 15: hinge element
- 16: lid holding element
- 17: lid contact element
- 18: fluid level indicator
- 19: upper opening
- 20: centering element
- 20a: buoyancy element
- 20b: lowering element
- 21: magnetic element
- 22: probe positioning element
- 23: handle element
- 24: hob, stove
- 25: extension means
- 26: spring element
- 27: probe
- 28: wire means
- 29: grid

## Claims

1. A cooking system (1) suitable for cooking process, particularly a sous vide cooking process, of at least one piece of foodstuff (9), particularly vacuum packaged foodstuff (9), comprising
a cooking pot (2), and
an insert (3) suitable for positioning of said foodstuff (9), wherein the insert is arrangable in said cooking pot (2),
**characterized in that**
said insert (3) comprises at least one positioning element (4) for positioning a foodstuff (9) such that a fluid (5) fillable or filled into the cooking pot (2) can circulate around the foodstuff (9),
and wherein the insert (3), particularly the at least one positioning element (4), comprises a fluid circulation enhancing means (8), suitable for enhancement of circulation of said fluid (5) in said cooking pot (2).

2. The cooking system (1) according to claim 1, wherein the insert (3) comprises at least one further positioning element (14) for positioning the piece of foodstuff (9).

3. The cooking system (1) according to any one of claims 1 to 2, wherein the at least one positioning element (4) is located in proximity to the bottom wall (7a) of the cooking pot (2), preferably arranged in parallel to said bottom wall (7a).

4. The cooking system (1) according to any one of claims 1 to 3, wherein the at least one positioning element (4) and/or the at least one further positioning element (14), is configured as a plate.

5. The cooking system (1) according to any one of claims 1 to 5, wherein the insert (3), comprises at least one separating means (11) for separation of a first piece of foodstuff (9a) from at least one further piece of foodstuff (9b), wherein preferably said at least one separating means (11) can be removably attached to said insert (3).

6. The cooking system (1) according to any one of claims 1 to 5, wherein the at least one separating means (11) comprises at least one first spacer element (12a) and at least one second spacer element (12b),
wherein the at least one first spacer element (12a) and the at least one second spacer element (12b) are arranged spaced to each other, wherein
preferably the at least one first spacer element (12a) and the at least one second spacer element (12b) are configured as parallel grids, and/or wherein the at least one first spacer element (12a) and the at least one second spacer element (12b) are arranged such that a distance between the at least one first spacer element (12a) and the at least one second spacer element (12b) is at least 5 mm, at least 4 mm, or at least 3 mm.

7. The cooking system (1) according to any one of claims 1 to 6, wherein the insert (3), preferably the at least one further positioning element (14),
and/or
the at least one separating means (11), preferably the at least one first spacer element (12a) and/or the at least one second spacer element (12b),
comprises at least one fixing element (13).

8. The cooking system (1) according to any one of claims 1 to 7, wherein the insert (3), preferably the further positioning element (14) and/or the at least one separating means (11), comprises at least one lid holding element (16), preferably suitable for holding a lid (10) of the cooking pot (2) in an at least partially open position.

9. The cooking system (1) according to any one of claims 1 to 8, wherein the insert (3) comprises at least one centering element (20), for positioning of the insert (3), preferably of the positioning element (4) and/or the at least one further positioning element (14), relative to a wall (7), preferably the bottom wall (7a) and/or the side wall (7b) of the cooking pot (2).

10. The cooking system (1) according to any one of claims 1 to 9, wherein the insert (3), preferably the at least one positioning element (4) and/or the at least one further positioning element (14), comprises at least one probe positioning element (22) for positioning a probe (27), preferably a temperature probe (27).

11. The cooking system (1) according to any one of claims 1 to 10, wherein the insert (3), preferably the further positioning element (14) and/or the at least one separating means (11), comprises at least one indicator (18) for indicating at least one level of the fluid (5) in the cooking pot (2).

12. An insert (3) for a cooking system (1) according to any one of claims 1 to 11.

13. Cooking pot (2) for a cooking system (1) according to any one of claims 1 to 11, preferably comprising an insert (3) according to claim 12.

14. A lid (10) for a cooking system (1) according to any one of claims 1 to 11, preferably comprising an opening for placing a probe (27).

15. Use of a cooking system (1) and/or a cooking pot (2) and/or an insert (3) in a sous-vide cooking process,
wherein the cooking system (1) is a cooking system (1) according to any one of claims 1 to 11 and/or
wherein the cooking pot (2) is a cooking pot (2) according to claim 13 and/or
wherein the insert (3) is an insert (3) according to claim 12.
